# EUROPEAN PATENT SPECIFICATION

(11) **EP 2 580 469 B1**
(45) Date of publication and mention of the grant of the patent: **19.10.2016**
(21) Application number: 11742548.8
(22) Date of filing: 08.02.2011
(51) Int. Cl.: F03D 13/20

(54) **LIFTING DEVICE FOR HOISTING COMPONENTS INCLUDED IN WIND TURBINES AND SIMILAR STRUCTURES**
HEBEVORRICHTUNG ZUR ANHEBUNG VON KOMPONENTEN IN WINDTURBINEN UND ÄHNLICHEN STRUKTUREN
DISPOSITIF DE LEVAGE PERMETTANT DE HISSER DES ELEMENTS COMPRIS DANS DES EOLIENNES ET DES STRUCTURES SIMILAIRES

(30) Priority: 09.02.2010 SE 1000123
(43) Date of publication of application: 17.04.2013
(73) Proprietor: Erigovis AB, 891 33 Örnsköldsvik (SE)
(72) Inventor: VON AHN, Patrik, 894 31 Själevad (SE)
(86) International application number: PCT/SE2011/000023
(87) International publication number: WO 2011/099916

(56) References cited:
- WO-A1-03/029650
- WO-A1-2008/132226
- DE-A1- 19 741 988
- DE-A1- 19 741 988
- DE-A1-102004 033 681

## Description

### Technical Field

The present invention concerns a lifting device intended to be used for the lifting and positioning of objects included in wind turbines in the vertical direction along a wind turbine tower's axial direction in accordance with the claims.

### Background of the Invention

A problem with existing wind turbine designs is that they are costly to erect. One of the reasons why it is costly to construct wind turbines is caused by the fact that their erection requires the costly lifting of components such as propeller blades, generators and several other components to the top part of the wind turbine. This lifting of components is preferably carried out with the aid of cranes. A wind turbine tower's height is limited in great part by the cranes that lift up components to the top of the tower, which may be 80 to 100 meters or more above ground. Mobile cranes with this height lifting capacity are expensive to buy or to hire therefore there are only a small number of mobile cranes which have the ability to lift components to this height. Wind turbines are often located in remote areas where wind conditions are favorable and disturbances to the surrounding environment are minimal. Roads with sufficient load bearing capacity that allow for the transportation of components and the crane are often expensive to build. Therefore there exists a need for a simpler method for the elevation of components to the top of a wind turbine tower.

Another problem with existing wind turbines is that it is difficult and costly to replace components in the nacelle (housing) at the top of the tower, which may exceed a height of 80 meters above ground. Only a limited number of mobile cranes have the ability to lift up components to these heights and also lift down components from these heights. It may take a long time and result in considerable costs to move a mobile crane with sufficient capacity to the site where the wind turbine that needs to be repaired is located. The consequences are usually lengthy downtimes for wind turbines, which in turn results in costly production losses.

There exists in both of the above mentioned problems even the problem that the lifted object during lifting needs to be rotated around one or more axes. During elevation of a propeller hub with accompanying propeller blades from the ground to the nacelle, it is necessary to turn the propeller from a position where the propeller axel has an essentially vertical direction (horizontal direction for the accompanying blades) to a position where the propeller axel has an essentially horizontal direction (where the blades have an essentially vertical direction). If the elevated unit is comprised of an assembled propeller, propeller axel and generator, the unit during attachment to the nacelle may need to be positioned in several axes and around several axes direction simultaneously. Prior art lacks the positioning possibilities in the corresponding axial direction which is possible with the design in accordance with the present invention.

A recurring problem with structures such as wind turbines is that they require periodic maintenance. This maintenance may consist of the need to replace components in accordance with the description found above. Maintenance may also include surface finishing or the like of the tower which may need to be done and redone depending on the tower's life span. For example a wind turbine tower constructed according to SE1000122-0 has a much longer life span than other types of tower designs thanks to the fact that its sections are welded together and not bolted by bolt connections or other similar types of connections. This type of long lasting design will result in the need to replace components at the top of the tower such as for example the propeller hub, propeller blades, generator and other components before the tower reaches the end of its life span. The long lasting structural integrity of a tower according to SE1000122-0 will also most likely produce the need for several surface treatments (painting) during the tower's long life span.

A problem occurred when lifting objects with free hanging wire, cable (line) or similar is that the lifting is sensitive to windy conditions. Because the elevation of components to the top of a wind turbine's tower usually requires lifting to heights of 90 meters or more, windless conditions seldom exist during elevation. This is especially problematic for wind turbines located in lakes or marine environments where winds are hardly ever calm. Even if calm winds should temporarily prevail in a marine environment, the sea surface can still be significantly rough to hamper or even stop the elevation and positioning of objects such as a nacelle or propeller blade from the surface to the top of a wind turbine tower. Floating platforms for cranes or other lifting devices are sensitive to unstable conditions which are often present in marine environments. Thus elevation with known types of lifting devices on both land and water can only be performed during favorable weather conditions where low winds and waves prevail.

A still further problem with known designs of lifting devices, are that they are intended for specific types of elevation. In order to handle all types of hoisting (elevation) that can arise during the construction of a wind turbine and its subsequent maintenance, several different types of lifting devices are required.

A yet further problem with many known designs of lifting devices that attach to a tower is so called "jackknifing" of the lifting arm (crane arm) during lifts to the top of a wind turbine tower. This problem occurs when the crane arm's axis of rotation is located in close proximity the tower's axial center. When the lifting arm reaches a vertical position or an essentially vertical position, there is a risk that the weight of the lifted object will force the arm to tip backward causing a catastrophic failure of the lifting device.

### Prior Art

Designs that are intended to be used to lift up components to the top of a tower of a wind turbine are previously known. For instance US2009282776 describes a hoisting device which is intended to move components to the top of the tower of a wind turbine. The design includes a variant of a platform but it is only intended to be used to lift objects and not used in connection with maintenance and the like. The design differs significantly from the design in accordance with the present patent application. For example, it is not possible with this design to lift a propeller and during the lift position the propeller from an essentially horizontal direction to an essentially vertical direction.

In WO2008132226 by the applicant Westas is described and shown a device for mounting and demounting propeller blades in a wind turbine. The design described in the patent seems weak and only suitable for lifting lighter objects. It is also a prerequisite that the lifted object be connected to the lifting device in the lifted objects equilibrium when it is lifted. Further, the design does not allow for an object to be lifted to the wind turbine tower's top. This is why it is not possible to utilize the device in accordance with WO2008132226 to lift up heavy objects such as a nacelle, a generator or similar components to a wind turbine tower's top. Further, the design according to WO2008132226 differs from the design in accordance with the present patent application because it does not include a function with which the lifted object can rotate around the tower's axial direction without the lifting device being freed from the tower. Because of its design the lifting device is very sensitive to wind. These shortcomings entail that the design according to WO2008132226 differs significantly from the design in accordance with the present patent application.

In DE19741988 a lifting device is described and shown which is intended to be used for lifting an object such as a nacelle to a wind turbine tower's top. Further DE19741988 describes a lifting device that includes a conveying device with which the lifting device can be moved in the tower's vertical direction.

The design according to DE19741988 differs significantly in relation to the lifting device according to the present patent application. For example, the elevation of an object in accordance with DE 19741988 is accomplished freely hanging by a cable, wire, line or similar. Because elevation occurs with an object freely hanging in a cable or similar, lifting performed by the lifting device in accordance with DE19741988 is substantially more wind sensitive than lifting performed with a design in accordance with the present patent application. The design according to DE19741988 can therefore only be used in situations where essentially windless conditions occur. Because the elevation of components to the top of wind turbine towers usually occur to heights of 90 meters or more, where it seldom is calm, lifts with the device according to DE19741988 are only accomplished with great difficulty. This is especially so for wind turbines located in lakes or marine environments where winds and/or seas are hardly ever calm. The lifting device according to the present patent application does not suffer from these problems thanks to the fact that its lifting device is substantially less sensitive to wind.

Even other deficiencies exist with the design in accordance with DE19741988. For example, the lifting device, when a lifted object is suspended on a cable or similar, only allows for limited positioning of the lifted object with almost no degree of freedom. Therefore the design in accordance with DE19741988 can not in a corresponding manner such as with the design in accordance with the present patent application be used to position a lifted object in a multitude of free positions in relation to the tower.

The above mentioned designs are plagued with several different deficiencies and shortcomings. For example, these designs lack a positioning function with which for instance a unit including an assembled propeller (propeller with mounted propeller blades), propeller axel and generator can be elevated to a tower's top and maneuvered from a position where the propeller axel is essentially vertically directed to a position where the propeller axel is essentially horizontally directed. Furthermore, there exists a need to rotate that which is to be lifted around the tower's center axis, that is to say its vertical direction. There exists a clear need for better types of lifting devices for lifting objects to the top of wind turbine towers.

### Brief Description of the Invention Concept

The main purpose of the present invention is to achieve an improved lifting and positioning device with which components can be elevated along a wind turbine tower and then positioned at the tower's top respectively. Another purpose of the present invention is to create a lifting device which can be moved from one wind turbine tower to another wind turbine tower. Still another purpose of the present invention is to create a lifting device with supports that can be positioned in relation to the tower's diameter.

### Brief Description of the Drawings

In the following detailed description of the present invention, referrals and references to the accompanying figures will be made. Each figure is summarized in the following figure list. Note that the figures are schematic and therefore details may have been omitted. The exemplifying embodiments shown in the figures are not limiting in regards to the scope of the present patent application.

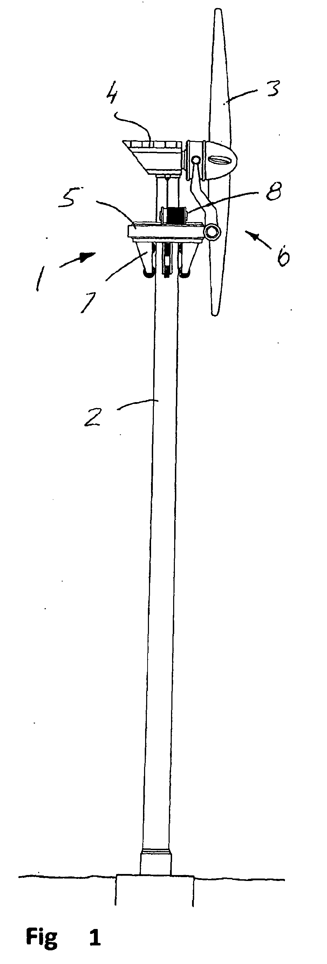

Figure 1 shows a conveying device in accordance with the present invention that is connected to the tower of a wind turbine.
Figure 2 shows schematically a first embodiment of the present lifting and positioning device more in detail.
Figure 3A shows the included frame as seen from above.
Figure 3B shows the included frame as seen from the side.
Figures 4A and 4B show in a cross-sectional view of the frame different types of bearing mountings of the jib bracket in relation to the frame.
Figure 5A shows a first embodiment of the adjustment device included in the supporting device.
Figure 5B shows a second embodiment of the adjustment device included in the supporting device.
Figures 6A - 6C show examples of alternative embodiments of conveying devices for maneuvering the lifting and positioning device in the tower's axial direction.
Figures 7 - 12 show sequentially an example of how a component can be lifted and positioned with the present invention.
Figure 13 shows schematically an alternative variant of the positioning device.
Figure 14 shows an alternative embodiment of the present lifting and positioning device.
Figures 15A and 15B show an alternative embodiment of the present lifting and positioning device where the frame is guided in relation to the tower.
Figure 16 exemplifies sequentially the hoisting of a propeller blade with the present lifting and positioning device.

### Detailed Description of the Invention

With reference to the figures is shown a combined lifting (conveying) and positioning device **1** in accordance with the present invention. The lifting and positioning device 1 is preferably intended to be temporarily connected to a wind turbine's tower **2.**

The lifting and positioning device 1 is intended to be used for moving at least one object **3,** such as for example one or more components, units, modules or similar, in the tower's 2 axial direction. The lifting and positioning device 1 is preferably intended to lift components up to or down from the nacelle **4** at the top of the wind turbine's tower 2. The lifting device is even intended to be used for lifting the entire or part of the nacelle 4 with accompanying components to the top of the tower 2.

The lifting and the positioning device **1** includes functions that position the lifted object 3, unit, component, module or the like during lifting, mounting, demounting or other situations where a positioning (change in point of locus) of the lifted object needs to be done.

The lifting device 1 includes at least one frame **5,** at least one positioning device **6**, at least one supporting device **7** and at least one conveying device **8.** The frame 5 is intended to encompass or essentially encompass the circumference of the tower 2. The frame 5 consists preferably of at least one first frame part **9** and at least one second frame part **10.** The first frame part 9 and the second frame part 10 are connected together with at least one first interlocking member **11.**

The first frame part 9 and the second frame part 10 are preferably connected together with at least one first interlocking member **11** and at least one second interlocking member **12.** In the figures the first interlocking member 11 consists of at least one or several bolt connections (screws). The second interlocking member 12 in the figures consists of at least one or several bolt connections (screws). It is conceivable that the interlocking members 11, 12 consist of other suitable for the purpose interlocking members. For example, the interlocking members may consist of axels or the like which pass through one or more holes in the first frame part and holes in the second frame part.

The positioning device 6 is intended to be connected to the frame 5. The positioning device includes at least one jib arm **13.** The jib arm 13 is for example intended to be used to change the location and position of the lifted object relative the frame 5, tower 2 and the nacelle 4. The jib arm 13 is preferably of a module which can be exchanged (interchanged) and adapted to the object or the objects to be lifted and positioned. The jib arm 13 also has an interchangeable connector on the end which connects with the object 3 to be lifted. This allows the jib arm 13 to be adapted to the object or the objects to be lifted and positioned. The jib arm's 13 design may therefore vary widely within the scope of the present patent application.

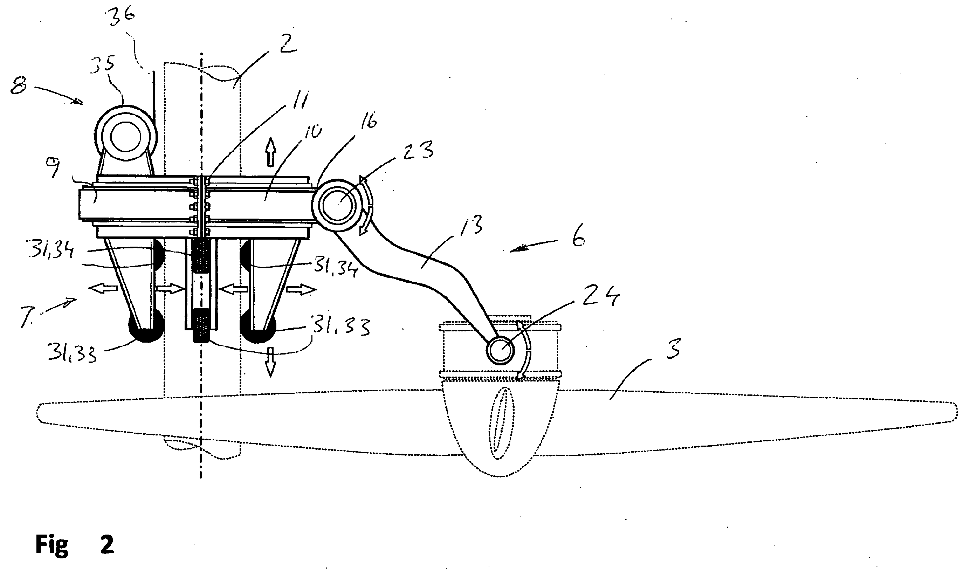

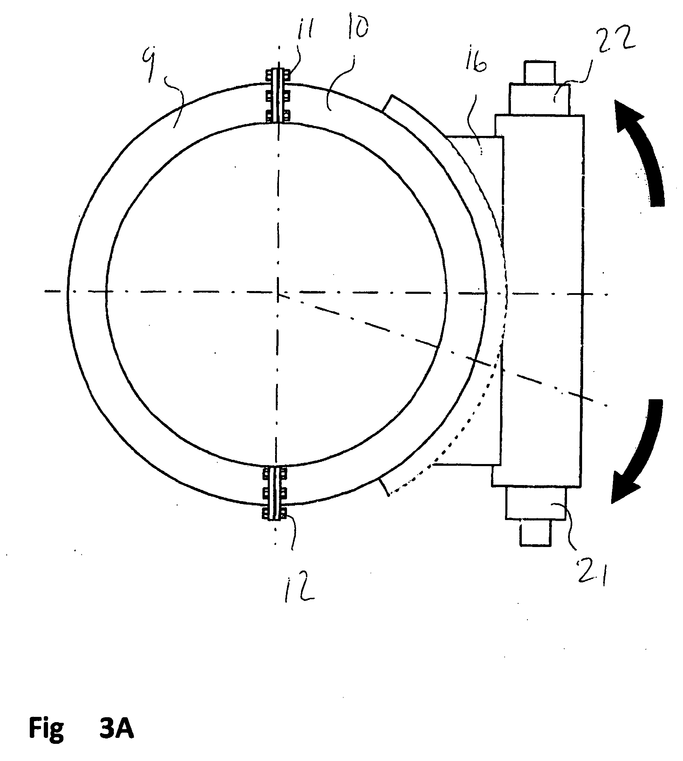

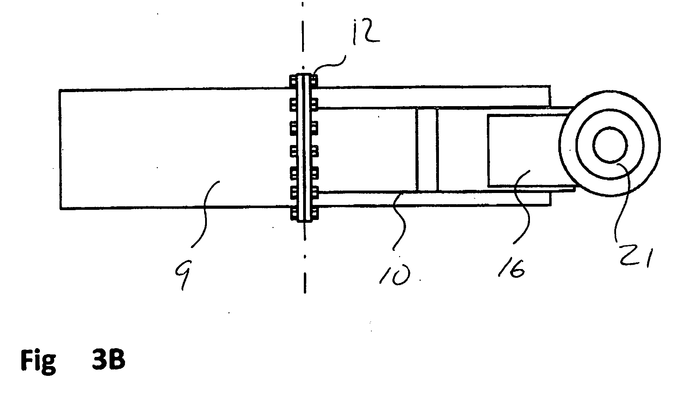

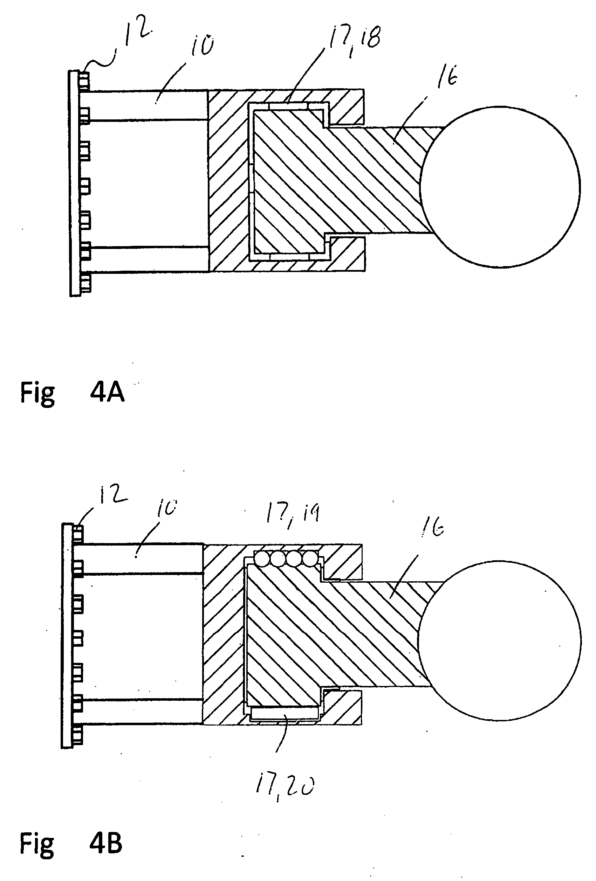

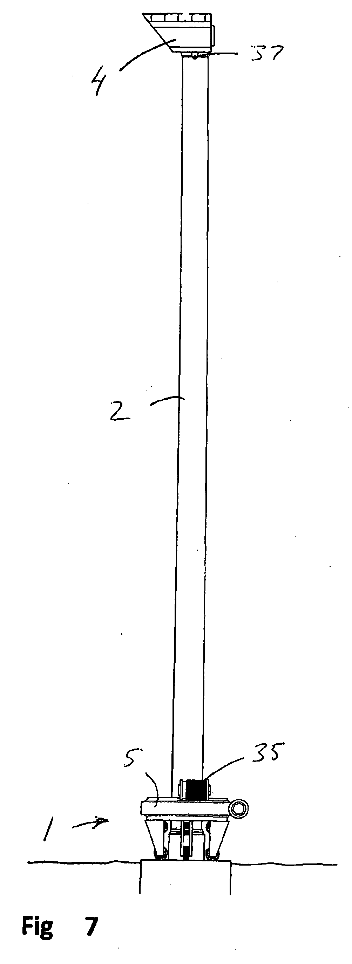

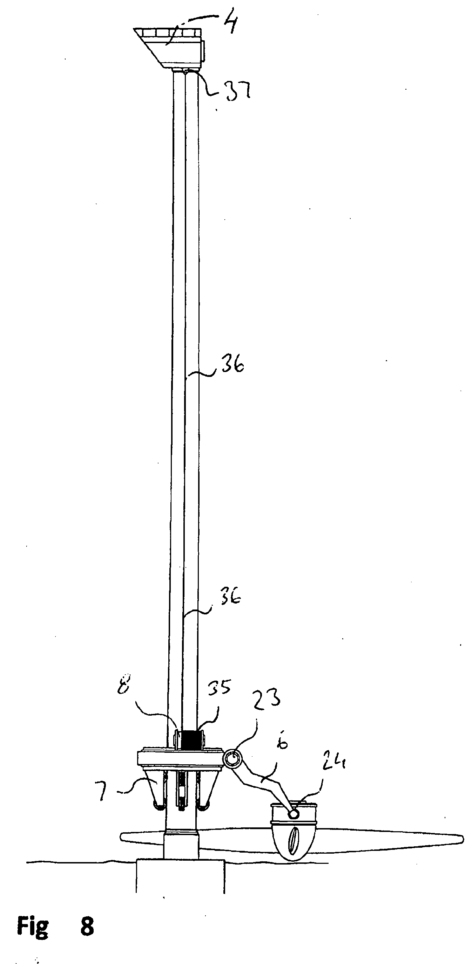

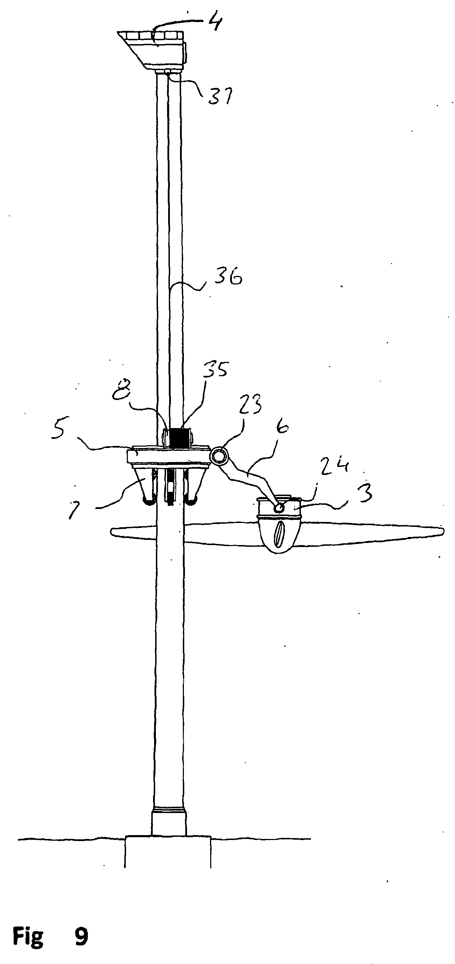

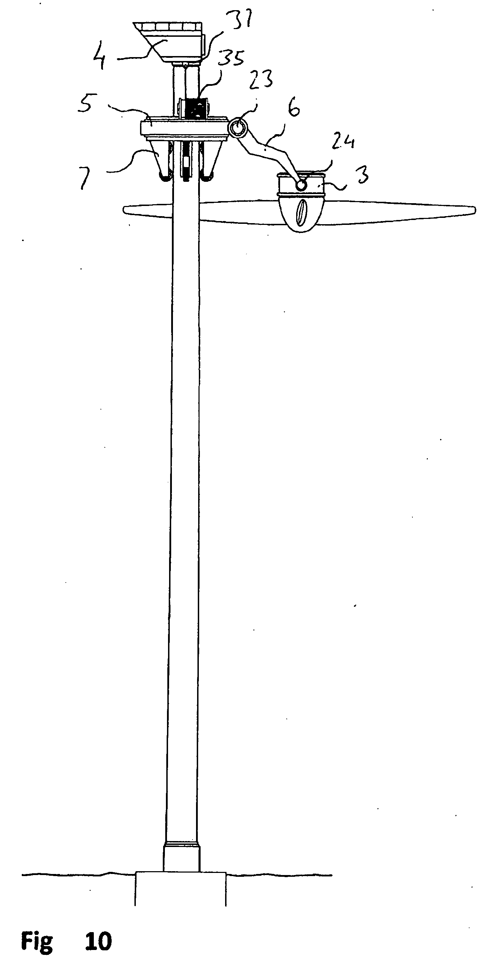

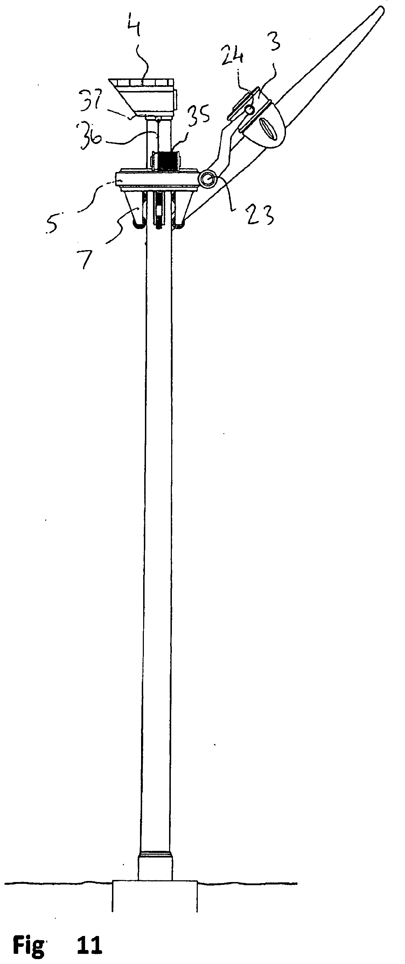

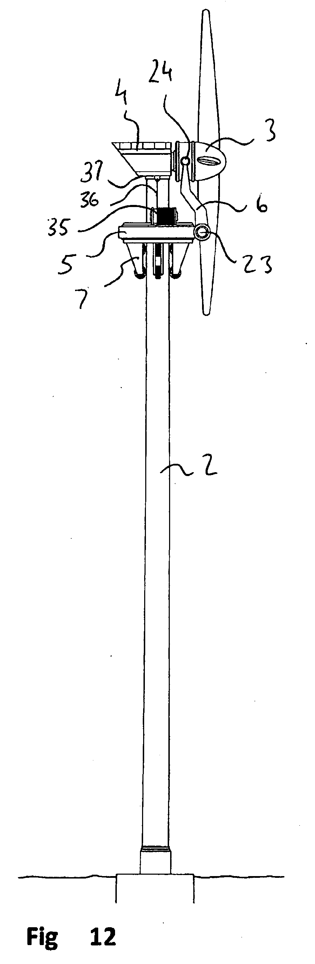

The jib arm 13 exemplified in figures 2 - 13 includes at least one first arm part **14** and at least one second arm part **15.** The jib arm 13 is preferably connected to the frame 5 via at least one jib bracket **16**. The jib bracket 16 in the exemplifying embodiment includes at least one T-shaped part (position) which via at least one bearing **17** is bearingly arranged in a corresponding T-shaped groove (position) in the frame. In alternative embodiments, the T-shaped part and the T-shaped groove may be of another suitable form for this purpose. The jib arm 13 will by this design be pivotally arranged in relation to the frame's 5 rotational center and the tower's axial center. The jib bracket 16 may be able to rotate along all or part of the frame's 5 circumference. In the exemplifying embodiment the jib bracket 16 is rotatable along a part of the frame's 5 circumference. The ability to rotate (swivel) between the jib bracket and the frame is achieved via at least one bearing 17 and preferably with several bearings 17. Each respective bearing 17 may consist of a slide bearing **18,** a ball bearing **19,** a roller bearing **20** or other bearing suitable for this purpose. The bearing 17 may also consist of a combination of the specified bearings. Thanks to the bearing 17 the jib bracket becomes with the accompanying jib arm 13 pivotally arranged around the tower's 2 center of rotation (vertical axis).

The jib bracket 16 includes in the exemplifying embodiment at least one first axle neck (axle journal) **21** and at least one second axle neck **22** to which the jib arm 13 is bearingly mounted. The first axle neck 21 and the second axle neck 22 may consist of separate axle necks or consist of one axle where axle neck 21 and axle neck 22 are integrated. The jib arm's 13, first arm part 14 is connected to the first axle neck 21. The jib arm's 6 second arm part 15 is connected to the other axle neck 22. The connection of jib arm 6 to the axle necks 21 and 22 is achieved with previously known technology, and this is why it is not described in more detail in this patent application. In alternative embodiments, it is conceivable that jib arm 13 is connected to the frame 5 with another suitable for this purpose and previously known technology.

The jib arm 13 is the preferred embodiment pivotally arranged around one first axis of rotation **23** which essentially coincides with the first axle neck's 21 and the second axle neck's 22 axial center (center line). The axis of rotation 23 is preferably essentially horizontally directed. The axis of rotation 23 is also preferably essentially tangentially directed relative to the tower. In alternative embodiments the axis of rotation 23 may be of a direction which substantially deviates from an essentiallyhorizontal direction. In alternative embodiments, it is conceivable that the axis of rotation 23 may have another direction, which differs substantially from an essentially tangential direction.

A rotation between object 3 and the jib arm 13 can also occur via at least one second axis of rotation **24.** The rotation of the object around the axis of rotation 24 can be accomplished by using at least one hydraulic motor (not shown in the figures) or similar. It is also conceivable that the rotation of the object is accomplished with electric power or another for this purpose appropriate power.

In alternative embodiments it is conceivable that the jib bracket 16 is rotatable around an essentially horizontal center of rotation that is essentially radially directed relative tower's center of rotation. The jib arm 13 may also be pivotally arranged around the jib arm's longitudinal direction.

The design includes at least one supporting device 7 with which the lifting and positioning device 1 is supported against part of the tower's mantle surface. The supporting device 7 includes preferably at least three supporting members **25** which support and position the lifting device relative the wind turbine tower 2. With the adjustment device **26** an adjustment of the supporting device in relation to the tower's diameter is achieved. In the exemplifying embodiment shown in the figures the lifting and positioning device 1 has four supporting members 25, three of which are shown in the figures. The supporting members 25 positions are adjustably (maneuverably) arranged in a radial direction relative the tower's 2 axial direction. The maneuvering of each respective supporting member 25 is preferably accomplished in an essentially radial direction relative to the tower's 2 axial direction. Alternatively, the supporting members 25 maneuvering in relation to the tower's axial direction may substantially deviate from an essentially radial direction.

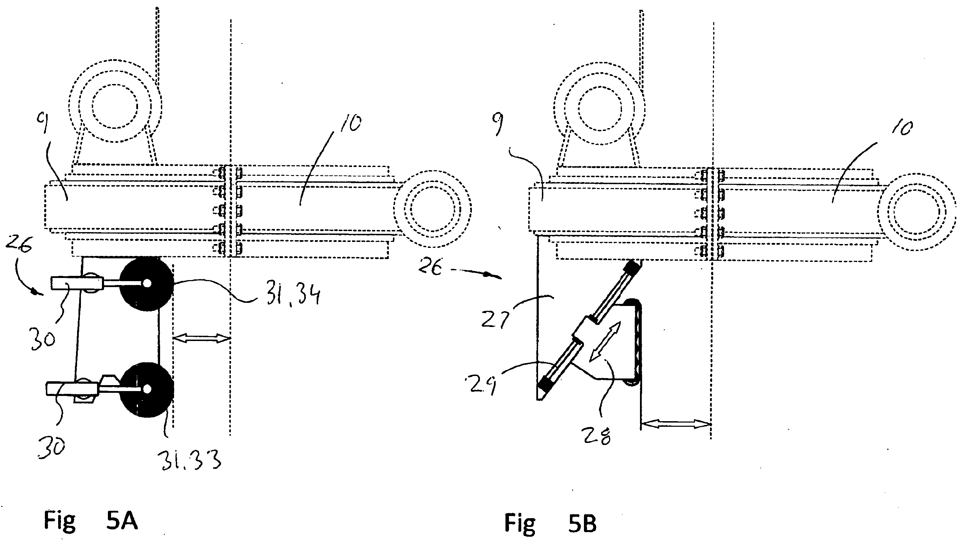

Figures 5A and 5B show how the maneuvering of each respective supporting member's position relative to the tower (the tower's mantle surface and the axial center of the tower) can be achieved with at least one adjustment device 26.

Figure 5B shows how the adjustment device 26 may consist of at least one first adjusting member **27** and at least one second adjusting member **28.** The first adjusting member 27 and the second adjusting member 28 are in the displayed embodiment in figure 5B wedge-shaped. The first wedge-shaped adjusting member 27 and the second wedge-shaped adjusting member **28** are arranged to be operated in relation to one another. Maneuvering the wedge-shaped adjusting members 27 and 28 is mutually achieved preferably by at least one of the wedge-shaped adjusting members 27 and 28 being movably arranged relative to the second adjusting members 27 or 28. Preferably, the second adjusting member 28 is movably arranged relative the first adjusting member 27. Maneuvering the second adjusting member 28 relative to the first adjusting member 27 occurs, for example with at least one ball screw **29** or similar. By the choice of the relative direction of movement between the first adjusting member 27 and the second adjusting member 28, an adjustment of the supporting device's position in proportion to the changes in the tower's (2) diameter or dimension occurs. Movement of the adjusting member 28 relative the adjusting member 27 in one direction reduces the distance between the supporting member and the tower's 2 axial center (and mantle surface). During movement of the adjusting member 28 in the other direction, relative adjusting member 27, an increase in distance occurs between the supporting member and the tower's 2 axial center (and the tower's mantle surface).

Figure 5A shows in an alternative embodiment that the adjustment device 26 may consist of at least one hydraulic cylinder **30**, or another for the purpose appropriate pressure cylinder or device with which the supporting member's position relative to the frame and the tower's axial center (and mantle surface) can be adjusted. In embodiments where hydraulic components are used, the lifting and positioning device includes preferably at least one hydraulic pump, hydraulic tank and other components necessary to operate the hydraulic components such as hydraulic cylinder, hydraulic motor or the like (these are not shown in the figures). Alternatively, the powering of the hydraulic components can be accomplished via at least one hydraulic hose connected to a hydraulic pump and hydraulic tank positioned in another place other than mounted to the lifting and positioning device 1. It is conceivable that adjustment member consists of at least one electric motor.

The exemplified supporting members 25 in the figures consist of wheels 31. In alternative embodiments, it is conceivable that the supporting members 25 consists of bands 32, harnesses or other suitable for the purpose supporting members 25. The figures show how the supporting members are located in the same height as the frame or under it. In alternative embodiments, it is conceivable that one or more of the supporting members are located above the frame 5 in the tower's axial direction.

In cases where the supporting members 25 consists of supporting wheels 31, or the like, the wheels 31 are preferably divided into at least one first set of supporting wheels **33** placed at a distance, in the frame's axial direction, from at least one second set of supporting wheels **34.** The design can also in alternative embodiments include at least one third set of supporting wheels, a fourth set of support wheels and so on.

The figures shown therefore a first set of supporting wheels (supporting members) 33 which are located at a distance, in the tower's axial direction, relative to a second set of supporting wheels 34. The distance between the first set of supporting wheels 33 and the second set of supporting wheels 34 may vary within the scope of the present invention.

The lifting device 1 is operated in the axial direction of the tower with at least one conveying device 8. The conveying device 8 may consist of at least one first winch **35** with which at least one wire, cable or similar **36** is maneuvered. The winch 35 allows the wire 36 or similar, to be rolled up and rolled out by, one in the winch 35 included drum or the like.

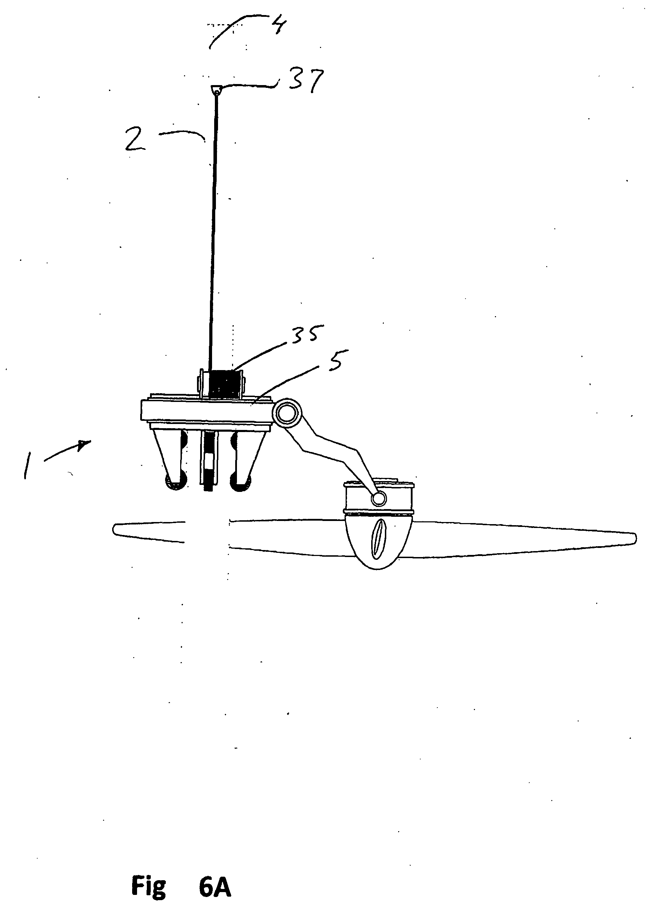

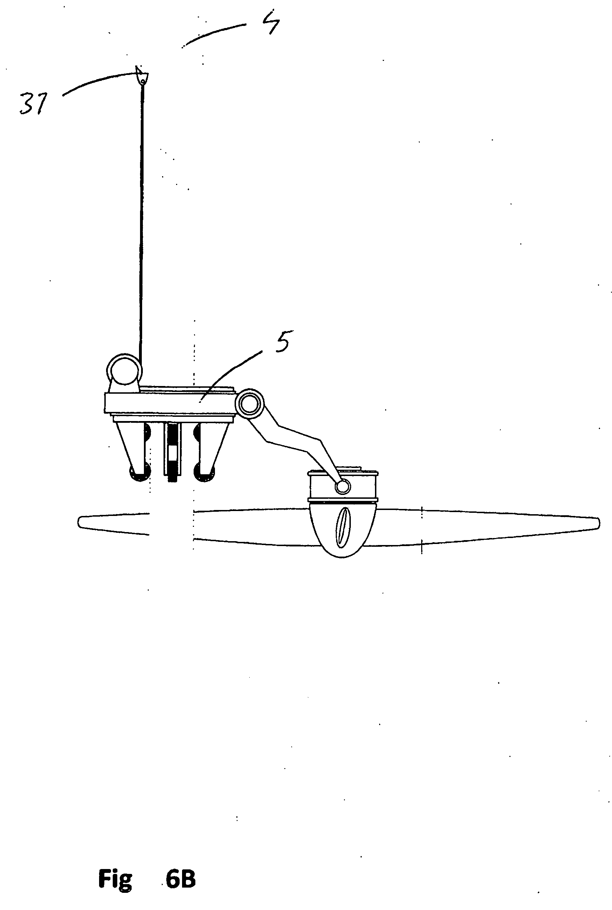

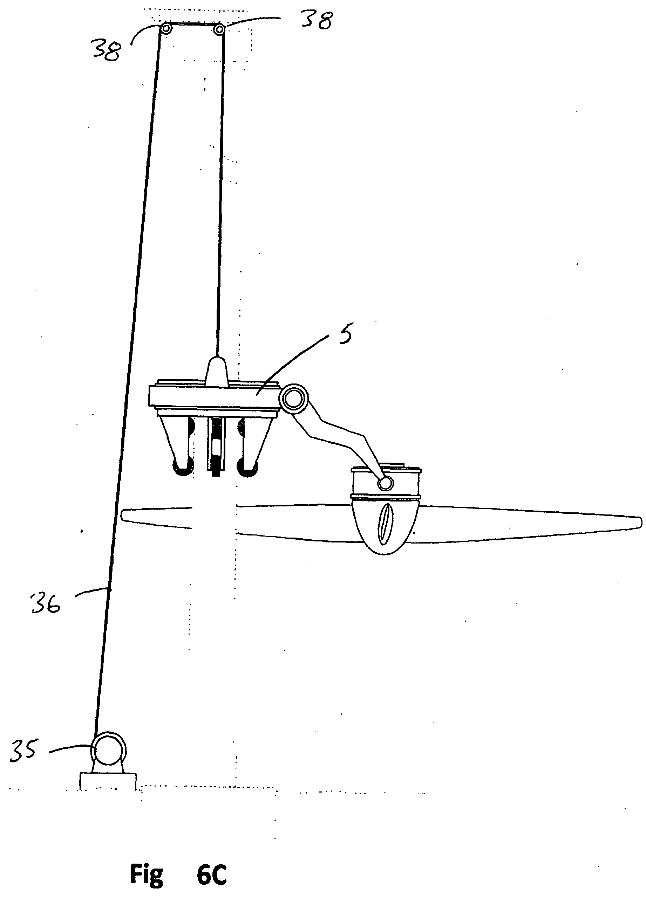

Figures 6A - 6C show that the wire 36 is in its one end connected to the winch 35. The wire's other end is attached to at least one bracket **37.** The bracket 37 may be located in the tower's 2 top, such as for example the nacelle 4 or another for the purpose appropriate position. In alternative embodiments, it is conceivable that the winch 35 is placed in the top of the tower 2 such as in the nacelle 4. It is also conceivable that the winch 35 is placed on the ground, connected to the tower's base foundation or the like as shown in figure 6C.

In alternative embodiments the wire may run over at least one pulley 38, barring wheel or the like. The pulley 38 is preferably bearingly arranged in the nacelle 4, or in another suitable location in the tower's 2 top. The figures show an alternative embodiment where the winch 35 is mounted to the frame 5 and the wire 36 is drawn via at least one pulley 38, barring wheel or similar into the nacelle 4 and then down to a bracket 37 in the frame 5.

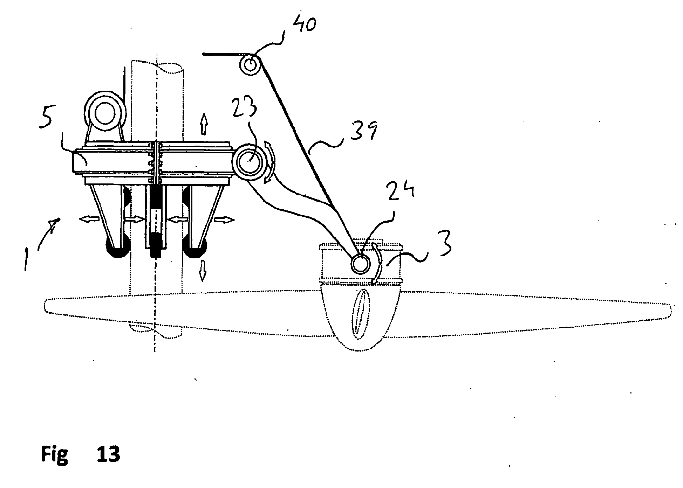

With reference to figure 13 is shown how the operation of the jib arm 13 in alternative embodiments can be accomplished using at least one second winch (not shown in the figures) with at least one accompanying wire **39** or similar. The second winch is designed to be used to operate jib arm 13 and the lifted object's 3 relative position to the frame 5, the tower 2 and the nacelle 4. The wire 39 runs preferably over at least a pulley wheel **40** which is located in a place suitable for the purpose. For example, the pulley wheel 40 can be bearingly mounted in the nacelle. Alternatively, the pulley wheel can be connected to an arm or similar connected to the frame. The second winch may be mounted (connected) to the frame 5, to the tower 2, to the nacelle 4 or be connected to a unit (vehicle, mount, etcetera) on the ground.

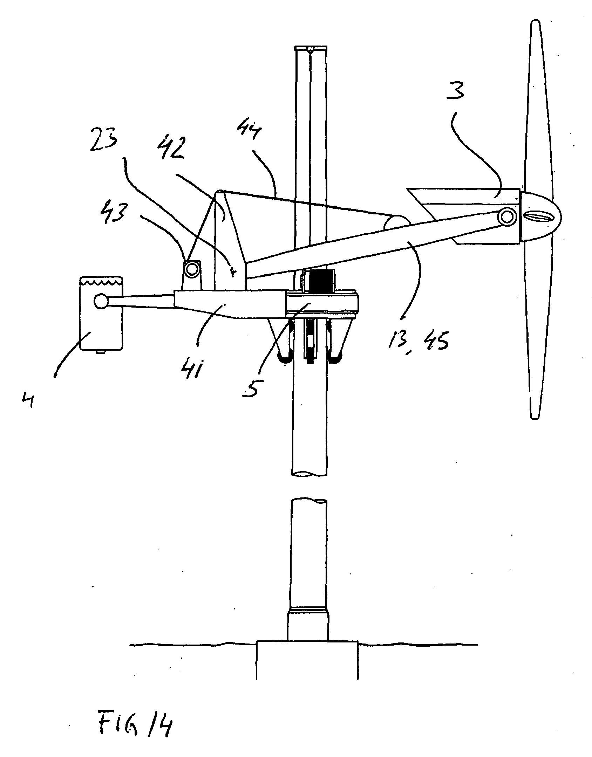

With reference to figure 14-16 is shown how the present lifting and positioning device 1 in alternative embodiments, includes at least one platform **41.** The platform 41 is preferably connected to, or integrated in, the jib bracket 16 of the lifting and positioning device 1. Preferably the platform **41** is connected in a demountable manner to the frame 5 via the jib bracket 16. The platform 41 can be used as a work platform for people working with the assembly and mounting of components in wind turbines or of persons performing maintenance on wind turbines.

The platform 41 also has unexpectedly led to a significant improvement in the ability to perform heavy lifting together with the lifting and positioning device 1. The improved lifting ability is achieved by the jib arm's 13 axis of rotation 23 being located at a distance from the tower's axial center in which a counteractive torque is created that reduces the load on the tower during lifting. This also hinders so called "jackknifing" of the jib arm or crane arm during lifts to the top of the tower 2. The platform also acts as a first counterweight to the lifted object or objects.

Figure 14 also shows how the jib arm 13 is connected to a jib bearing **42**, or other type of suitable fastening, which is located in, or connected to, the platform 41. The design in this embodiment includes a winch **43** which via at least one wire **44** maneuvers a jib arm 13 of crane arm type **45.**

The design may include a second counterweight **46** which preferably is connected to the frame 5 and the platform 41. The second counterweight's 46 position relative to the frame 5 can be firmly arranged. In an alternative embodiment, the second counterweight's 46 position may be adjustably arranged in relation to the frame 5, and the tower's 2, axial center. The second counterweight's 46 position may be adjustable in both the horizontal and vertical direction via for example telescopic devices with pivotally arranged bearings that are for example powered by hydraulics or other suitable for the purpose powering devices. The second counterweight (46) is preferably attached or detached to the frame (5) and adjusted in weight by means of adding or subtracting mass such as for example water, sand, metal or the like, depending on whether the wind turbine is located on land or a marine environment, according to the weight of the object (3) that is to be lifted.

The position of the jib arm's axis of rotation and the counterweight as represented by the platform and/or the second counterweight, in accordance with this embodiment allows a nacelle with its propeller, a complete module, to be lifted to the top of the tower. During the lift the counterweight position can be adjusted in relation to the lifted nacelle's weight and the distance between the lifted object's center of gravity and the tower's axial center.

The platform includes preferably a function with which the platform's horizontal position is detected. If deviations occur in the platform's essentially horizontal position, the supporting members are maneuvered to positions so that the platform achieves an essentially horizontal position.

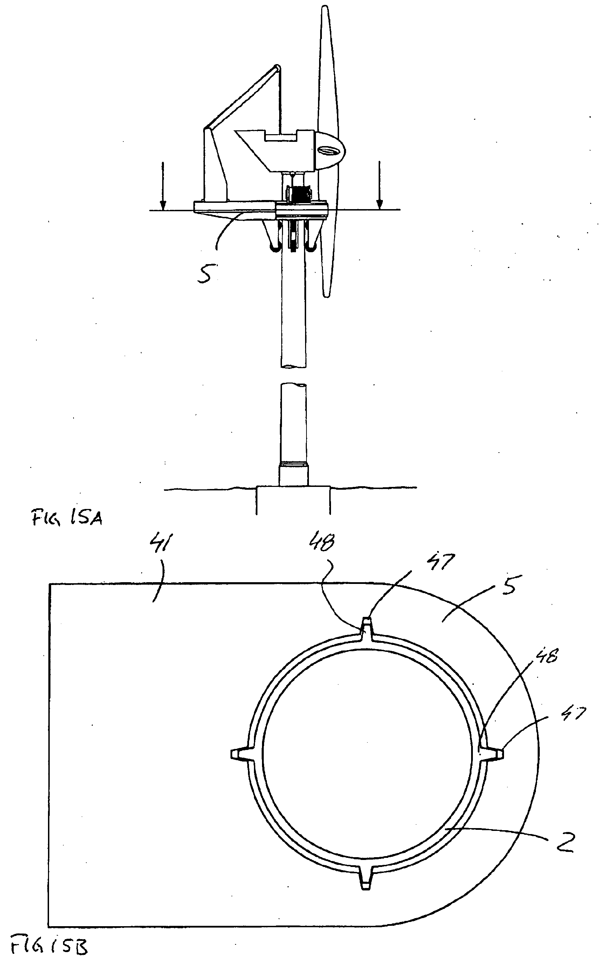

Figures 15A and 15B show how the frame 5 includes grooves **47**, recesses, notches or similar in the frame's axial direction. The grooves 47 may preferably take the form of wedge-shaped grooves. The grooves 47 in the frame 5 are intended to engage with protruding segments **48** on the tower, which run along the tower's 2 axial direction. The grooves 47 in frame 5 have the technical effect of providing an automatic positioning of the lifting and positioning device 1 in relation to the tower 2 which is achieved by the protruding segments 48 extending into the grooves 47.

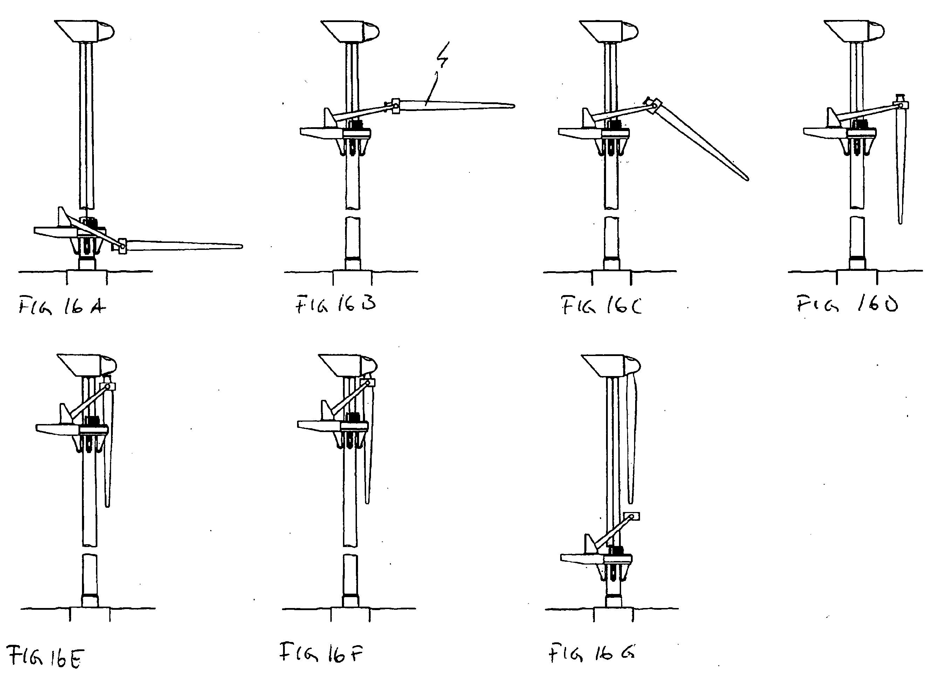

With reference to figures 16A - 16G, is shown a sequence where a propeller blade **49** is lifted with the present lifting and positioning device 1. A unique feature of the present lifting and positioning device 1 is that the propeller blade 49 at the start of the lift can be lifted from a position where the propeller blade 49 is essentially horizontally oriented. For example, the lift of the propeller blade may directly occur from a truck, boat, barge or similar transport without requiring a separate crane to initially lift the blade. Another unique feature is that the propeller blade 49 can be lifted with the lifting device 1 connected to one end, or in the essential proximity of the propeller blade's one end, preferably the end that is to be connected to the propeller hub. The figure sequence shows how the blade during lifting is rotated from an essentially horizontal position at ground or sea level to a vertical position at the top of the tower.

The lifting and positioning device 1 is intended to be controlled by at least one control system with which the lifting and positioning device's movements and functions are controlled. The control system includes at least one control unit with which at least one operator can control the lifting and positioning device's movement and functions during the lifting and positioning of the lifted object 3. The transmission of control information may be done wirelessly or by another suitable for the purpose transmission method. All or part of the lifting and positioning control can occur automatically via at least one type of software.

Alternatively, any other suitable for the purpose conveying device can be used to move the lifting and positioning device 1 in the tower's vertical direction. For example, any type of device can be used so that the lifting and positioning device can climb along the tower's vertical direction.

The design may in alternative embodiments consist of at least one first jib arm and at least one second jib arm which are pivotally arranged around at least one mutual axis. The jib arm may also include three or more arms.

In the detailed description of the present invention, design details may have been omitted which are apparent to persons skilled in the art. Such obvious design details are included to the extent necessary so that the proper and full performance of the present invention is achieved. For example, components such as axles, bearings, bolt connections, screws, hydraulic components such as hydraulic motors that turn or rotate maneuvering devices, cable assemblies, wire and a multitude of other components are included to the extent necessary so that an adequate function of the lifting device is obtained.

Even if certain preferred embodiments have been described in detail, variations and modifications within the scope of the invention can become apparent for specialists in the field and all such are regarded as falling within the scope of the following claims. For example, it is also conceivable that the tower may comprise another type of tower or mast than a tower designed for a wind turbine.

### Advantages of the Invention

The main advantage of the present invention is that a significantly improved lifting and positioning device with which components can be lifted up in the vertical direction of a wind turbine tower is achieved. A further advantage of the present lifting device is that the lifted object's position can be change during the lift. A still further advantage of the present invention is that the lifting device can be moved from one tower to another tower. A yet further advantage of the present invention is that its jib arm has an axis of rotation which is located at a distance from the tower's axial center. This hinders the arm from ever reaching a vertical position or an essentially vertical position which may induce so called "jackknifing" of the arm which is when the weight of the lifted object forces the arm to tip backward causing a catastrophic failure of the lifting device. A further advantage of the present invention is that it has at least one counterweight that balances the lifting devices and the lifted object weight so that their center of gravity essentially corresponds to the wind turbine tower's axial center.

## Claims

1. Lifting and positioning device (1), intended to be temporarily attached to a wind turbine tower (2) and intended to be used to lift objects (3) included in a wind turbine in the tower's (2) axial direction and position the lifted object (3) during the lift and the mounting/dismounting of the object (3) of the wind turbine, said lifting and positioning device (1) including at least one frame (5) comprised of at least one first frame part (9) and at least one second frame part (10) which are intended to be temporarily connected to each other and completely or partially enclose the tower's (2) circumference, said frame (5) supported against the tower with at least one supporting device (7) and moveable along the tower's vertical direction by at least one conveying device (8), and that the lifted object (3) is positioned by a positioning device (6) connected to the frame (5), wherein the positioning device (6) includes at least one jib arm (13) which is connected to frame (5) via at least one jib bracket (16) and the jib arm (13) is in its one end pivotally connected to the jib bracket (16) around at least one axis of rotation (23)
**characterized in that** said jib bracket (16) is pivotally arranged to rotate around the whole or part of the frame (5) and the tower's (2) circumference.

2. Lifting and positioning device (1) in accordance with claim 1 **characterized by** that the platform (41) is an integrated part of the jib bracket (16) of the frame (5) and constitutes at least one first counterweight that stretches outward from the tower (2).

3. Lifting and positioning device (1) in accordance with claim 1 **characterized by** that the platform (41) is integrated in the jib bracket (16) of the frame (5) and constitutes an essentially horizontal work surface for mounting/dismounting and maintenance.

4. Lifting and positioning device (1) in accordance with claim 1 **characterized by** that the platform (41) is temporarily integrated in the jib bracket (16) of the frame (5).

5. Lifting and positioning device (1) in accordance with claim 1 **characterized by** that the jib arm's (13) axis of rotation (23) is located at a distance from the tower's (2) axial center which hinders so called "jackknifing" of the jib arm (13) during lifts to the top of the tower 2.

6. Lifting and positioning device (1) in accordance with claim 1 **characterized by** that the lifting and positioning device (1) includes at least one second counterweight (46) which is connected to the frame 5 and is adjustable in distance from the tower's central axis allowing for a positional change in the center of gravity.

7. Lifting and positioning device (1) in accordance with claim 1 **characterized by** that the supporting device (7) includes at least three supporting members (25) which support and position the lifting device relative the wind turbine tower (2) and that at least one adjustment device (26) allows the adjustment of the supporting members (25) in relation to the tower's (2) diameter.

8. Lifting and positioning device (1) in accordance with claim 1 **characterized by** that the conveying device (8) includes at least one first winch (35) and at least one second winch with which the lifting device's vertical position in relation to the tower is maneuvered.

9. Lifting and positioning device (1) in accordance with claim 1 **characterized by** that the frame (5) includes at least one groove (47) in the frame's (5) axial direction which engages with the tower (2) via protruding segments (48) which run along all or part of the tower's (2) axial direction providing an automatic positioning of the lifting and positioning device (1) in relation to the tower (2).

10. Lifting and positioning device (1) in accordance with claim 1 **characterized by** that the jib bracket (16) includes a T-shaped part which is bearingly arranged via at least one bearing (17) in a T-shaped groove in the frame (5).

11. Lifting and positioning device (1) in accordance with claim 1 **characterized by** that the jib arm (13) is interchangeable in relation to the object (3) that is to be lifted.

12. Lifting and positioning device (1) in accordance with claim 1 **characterized by** that the lifting and positioning device (1) includes at least one second counterweight (46) which is connected to the frame 5 and is adjustable in relation to the lifted object's (3) weight and position allowing the center of gravity of the lifting and positioning device (1) and the lifted object (3) to essentially correspond with the tower's central axis.

13. Method for utilizing the lifting and positioning device (1) in accordance with one or more of the previous claims **characterized by** that the lifting and positioning device (1) is moved to a wind turbine where at least one object (3) is to be lifted in the tower's (2) axial direction, after which the lifting and positioning device (1) is connected around the tower (2) by the frame (5) being separated and reassembled around the tower's circumference, after which the conveying device (8) is connected to the tower (2), after which the object (3) is connected to the positioning device (6) and subsequently moved and positioned by the lifting device (1) in the tower's (2) axial direction during the simultaneous adjustment of supporting device's (7) position relative the tower's (2) axis of rotation and mantle surface, after which the lift of the object (3) is completed and any further lifting and positioning is carried out, after which the lifting and positioning device (1) is maneuvered to a position where the lifting device's (1) frame (5) can be separated and freed from the tower and the wind turbine, thus enabling the lifting and positioning device (1) to be transported to another wind turbine.

14. Method for utilizing the lifting and positioning device (1) in accordance with one or more of the previous claims **characterized by** that the second counterweight (46) is attached/detached to the frame (5) and adjusted in weight by means of adding/subtracting mass such as for example water, sand, metal or the like according to the weight of the object (3) that is to be lifted.

## Patentansprüche

1. Hebe- und Positionierungswerkzeug (1), vorgesehen zur temporären Befestigung an einem Windturbinenturm (2) und für das Anheben von Gegenständen (3) bestimmt, die sich in der Achsrichtung eines Windturbinenturms befinden, und den angehobenen Gegenstand (3) während der Montage/Demontage des Bauteils (3) der Windturbine zu positionieren, wobei das besagte Hebe- und Positionierungswerkzeug (1) mindestens einen Rahmen (5) enthält, der aus mindestens einem ersten Rahmenteil (9) und mindestens einem zweiten Rahmenteil (10) besteht, die dafür bestimmt sind, zeitweise miteinander verbunden zu werden und den Umfang des Turms (2) teilweise oder vollständig zu umschließen, dabei wird der besagte Rahmen (5) mit mindestens einem Stützwerkzeug (7) gegen den Turm gestützt und entlang der vertikalen Richtung des Turms mithilfe von mindestens einem Förderwerkzeug (8) beweglich ist, und der angehobene Gegenstand (3) wird mithilfe eines Positionierungswerkzeuges (6) positioniert, das an einem Rahmen (5) befestigt ist, wobei das Positionierungswerkzeug (6) mindestens einen Auslegerarm (13) hat, der an dem Rahmen (5) mit mindestens einer Kranauslegerhalterung (16) befestigt ist, und der Auslegerarm (13) befindet sich in seiner an einem Ende um mindestens eine Rotationsachse (23) mittig montierten Kranauslegerhalterung (16), die **dadurch gekennzeichnet ist, dass** die besagte Kranauslegerhalterung (16) mittig angeordnet ist, sodass sie um den ganzen oder einen Teil des Rahmens (5) und den Umfang des Turms (2) rotiert.

2. Das Hebe- und Positionierungswerkzeug (1) gemäß der Forderung 1 ist **dadurch gekennzeichnet, dass** die Plattform (41) ein integrierter Teil der Kranauslegerhalterung (16) des Rahmens (5) ist, und mindestens ein erstes Gegengewicht darstellt, das am Turm (2) hervorsteht.

3. Das Hebe- und Positionierungswerkzeug (1) gemäß der Forderung 1 ist **dadurch gekennzeichnet, dass** die Plattform (41) ein integrierter Teil der Kranauslegerhalterung (16) des Rahmens (5) ist, und eine ebene Arbeitsoberfläche zu Montage/Demontage und Wartung darstellt.

4. Das Hebe- und Positionierungswerkzeug (1) gemäß der Forderung 1 ist **dadurch gekennzeichnet, dass** die Plattform (41) zeitweise in die Kranauslegerhalterung (16) des Rahmens (5) integriert ist.

5. Das Hebe- und Positionierungswerkzeug (1) gemäß der Forderung 1 ist **dadurch gekennzeichnet, dass** die Rotationsachse (23) des Auslegerarms (13) sich in einem gewissen Abstand zur Achsenmitte des Turms (2) befindet, was das Zusammenklappen des Auslegerarms (13) während des Anhebens der Spitze des Turmes (2) verhindert.

6. Das Hebe- und Positionierungswerkzeug (1) gemäß der Forderung 1 ist **dadurch gekennzeichnet, dass** das Hebe- und Pösitionierungswerkzeug (1) mindestens ein zweites Gegengewicht (46) enthält, das am Rahmen (5) montiert ist, und dessen Abstand zur Mittelachse des Turms eingestellt werden kann, um eine Positionsänderung des Schwerpunktes zu ermöglichen.

7. Das Hebe- und Positionierungswerkzeug (1) gemäß der Forderung 1 ist **dadurch gekennzeichnet, dass** das Stützwerkzeug (7) mindestens drei Stützglieder (25) enthält, die das Hebewerkzeug stützen und relativ zum Windturbinenturm (2) positionieren, und dass mindestens ein Einstellwerkzeug (26) die Anpassung des Stützgliedes (25) relativ zum Turmdurchmesser ermöglicht.

8. Das Hebe- und Positionierungswerkzeug (1) gemäß der Forderung 1 ist **dadurch gekennzeichnet, dass** das Förderwerkzeug (8) mindestens eine erste Winde (25) enthält und mindestens eine zweite Winde, mit der die vertikale Position des Hebewerkzeuges relativ zum Turm verändert werden kann.

9. Das Hebe- und Positionierungswerkzeug (1) gemäß der Forderung 1 ist **dadurch gekennzeichnet, dass** der Rahmen (5) mindestens eine Kerbe (47) in Achsrichtung des Rahmens (5) enthält,
in die der Turm (2) über hervorstehende Segmente (48) greift, und die ganz oder teilweise entlang der Achsrichtung des Turms (2) verläuft und die automatische Positionierung des Hebe- und Positionierungswerkzeuges (1) relativ zum Turm (2) ermöglicht.

10. Das Hebe- und Positionierungswerkzeug (1) gemäß der Forderung 1 ist **dadurch gekennzeichnet, dass** die Kranauslegerhalterung (16) ein T-formiges Teil enthält, das tragend über mindestens ein Lager (17) in einer T-förmigen Kerbe im Rahmen (5) angeordnet ist.

11. Das Hebe- und Positionierungswerkzeug (1) gemäß der Forderung 1 ist **dadurch gekennzeichnet, dass** der Auslegerarm (13) je nach anzuhebendem Gegenstand (3) auswechselbar ist.

12. Das Hebe- und Positionierungswerkzeug (1) gemäß der Forderung 1 ist **dadurch gekennzeichnet, dass** das Hebe- und Positionierungswerkzrug (1) mindestens ein zweites Gegengewicht (46) enthält, das am Rahmen (5) montiert ist, und relativ zu Gewicht und Position des angehobenen Gegenstandes (3) verändert werden kann, wodurch der Schwerpunkt des Hebe- und Positionierungswerkzeuges (1) und des angehobenen Gegenstandes (3) der Mittelachse des Turms entsprechen.

13. Methode zur Verwendung des Hebe- und Positionierungswerkzeuges (1) gemäß einer oder mehrerer der vorherigen Forderungen, die **dadurch gekennzeichnet ist, dass** das Hebe- und Positionierungswerkzeug (1) zu einer Windturbine bewegt wird, an der mindestens ein Gegenstand (3) zur Achsrichtung des Turms (2) angehoben werden muss, wonach das Hebe- und Positionierungswerkzeug (1) um den Turm (2) mithilfe eines Rahmens (5) montiert wird, der getrennt und wieder am Umfang des Turmes montiert wird, wonach das Förderwerkzeug (8) an den Turm (2) montiert wird, wonach der Gegenstand (3) am Positionierungswerkzeug (6) montiert und schrittweise mithilfe des Hebewerkzeuges (1) in der Achsrichtung des Turms (2) bewegt und positioniert wird, während der gleichzeitigen Anpassung der Position des Stützwerkzeuges (7) relativ zur Rotationsachse und der Außenoberfläche des Turms (2), wonach der Gegenstand (3) abgeschlossen und alle weiteren Hebe- und Positionierungsschritte durchgeführt werden, wonach das Hebe- und Positionierungswerkzeug (1) an eine Position gebracht wird, an der der Rahmen (5) des Hebewerkzeuges (1) getrennt und vom Turm und von der Windturbine gelöst wird, wodurch der Transport des Hebe- und Positionierungswerkzeuges (1) zu einer anderen Windturbine möglich ist.

14. Methode zur Verwendung des Hebe- und Positionierungswerkzeuges (1) gemäß einer oder mehrerer der vorherigen Forderungen, die **dadurch gekennzeichnet ist, dass** das zweite Gegengewicht (46) am Rahmen (5) montiert oder demontiert wird und sein Gewicht durch Hinzufügen/Entfernen von Masse, beispielsweise Wasser, Sand, Metall oder ähnlichem, gemäß dem Gewicht des anzuhebenden Gegenstands (3) angepasst wird.

## Revendications

1. Dispositif de levage et positionnement (1), destiné à être temporairement fixé à la tour d'une turbine éolienne (2) et conçu pour lever les objets (3) contenus dans une turbine éolienne dans le sens axial de la tour et pour positionner l'objet levé (3) pendant le levage et le montage/démontage de l'objet (3) de la turbine éolienne, ledit dispositif de levage et positionnement (1) comprenant au moins un cadre (5) constitué d'au moins une première partie de cadre (9) et d'au moins une seconde partie de cadre (10) conçues pour être temporairement reliées ensemble et qui entourent totalement ou partiellement la circonférence de la tour (2), ledit cadre (5) étant maintenu contre la tour avec au moins un dispositif de soutien (7) et pouvant être déplacé verticalement sur la tour par au moins un dispositif de transport (8), et que l'objet levé (3) est positionné par un dispositif de positionnement (6) relié au cadre (5), ce dispositif de positionnement (6) étant constitué d'au moins un bras de potence (13) qui est relié au cadre (5) par au moins une traverse de potence (16) et le bras de potence (13) est à l'une de ses extrémités relié à la traverse de potence (16) par un pivot avec au moins un axe de rotation (23) **caractérisé en ce que** ladite traverse de potence (16) est équipée d'un pivot pour tourner autour de tout ou partie du cadre (5) et de la circonférence de la tour (2),

2. Dispositif de levage et positionnement (1) selon la revendication 1 **caractérisé en ce que** la plateforme (41) fait partie intégrante de la traverse de potence (16) du cadre (5) et constitue au moins un premier contrepoids qui se déploie en s'éloignant de la tour (2).

3. Dispositif de levage et positionnement (1) selon la revendication 1 **caractérisé en ce que** la plateforme (41) fait partie intégrante de la traverse de potence (16) du cadre (5) et constitue essentiellement une surface de travail horizontale pour le montage/démontage et la maintenance.

4. Dispositif de levage et positionnement (1) selon la revendication 1 **caractérisé en ce que** la plateforme (41) fait temporairement partie intégrante de la traverse de potence (16) du cadre (5).

5. Dispositif de levage et positionnement (1) selon la revendication 1 **caractérisé en ce que** l'axe de rotation (23) du bras de potence (13) est situé à une distance de l'axe central de la tour (2), ce qui empêche le phénomène dit de « mise en portefeuille » (13) pendant les levages jusqu'au sommet de la tour (2).

6. Dispositif de levage et positionnement (1) selon la revendication 1 **caractérisé en ce que** le dispositif de levage et positionnement (1) comprend au moins un second contrepoids (46) qui est relié au cadre (5) et dont la distance par rapport à l'axe central de la tour est réglable, ce qui permet un changement de position du centre de gravité.

7. Dispositif de levage et positionnement (1) selon la revendication 1 **caractérisé en ce que** le dispositif de soutien (7) comprend au moins trois éléments de support (25) qui soutiennent et positionnent le dispositif de levage par rapport à la tour (2) de la turbine éolienne et qu'au moins un dispositif de réglage (26) permet le réglage de l'élément de support (25) par rapport au diamètre de la tour.

8. Dispositif de levage et positionnement (1) selon la revendication 1 **caractérisé en ce que** le dispositif de transport (8) comprend au moins un premier treuil (25) et au moins un second treuil qui permettent de manoeuvrer le dispositif de levage pour ajuster sa position verticale par rapport à la tour.

9. Dispositif de levage et positionnement (1) selon la revendication 1 **caractérisé en ce que** le cadre (5) comprend au moins une fente (47) dans la direction axiale du cadre (5) qui vient en prise avec la tour (2) via des segments saillants (48) disposés sur tout ou partie de la direction axiale de la tour (2) et permettant un positionnement automatique du dispositif de levage et positionnement (1) par rapport à la tour (2).

10. Dispositif de levage et positionnement (1) selon la revendication 1 **caractérisé en ce que** la traverse de potence (16) comprend une partie en forme de T montée avec au moins un palier (17) dans une fente en forme de T dans le cadre (5).

11. Dispositif de levage et positionnement (1) selon la revendication 1 **caractérisé en ce que** le bras de potence (13) est interchangeable par rapport à l'objet (3) qui doit être levé.

12. Dispositif de levage et positionnement (1) selon la revendication 1 **caractérisé en ce que** le dispositif de levage et positionnement (1) comprend au moins un second contrepoids (46) qui est relié au cadre (5) et réglable par rapport au poids et à la position de l'objet (3) levé et permettant essentiellement de faire correspondre le centre de gravité du dispositif de levage et positionnement (1) et de l'objet levé (3) à l'axe central de la tour.

13. Méthode d'utilisation du dispositif de levage et positionnement (1) selon une ou plusieurs des revendications précédentes **caractérisée en ce que** le dispositif de levage et positionnement (1) est déplacé vers une turbine éolienne où un objet (3) au moins doit être levé dans le sens axial de la tour (2), après quoi le dispositif de levage et positionnement (1) est relié autour de la tour (2) par le cadre (5) étant séparé et réassemblé autour de la circonférence de la tour, après quoi le dispositif de transport (8) est relié à la tour (2), après quoi l'objet (3) est relié au dispositif de positionnement (6) et ensuite déplacé et positionné par le dispositif de levage (1) dans le sens axial de la tour (2) pendant le réglage simultané de la position du dispositif de soutien (7) par rapport à l'axe de rotation et la surface extérieure de la tour (2), après quoi l'objet (3) est terminé et tout levage et positionnement supplémentaire est réalisé, après quoi le dispositif de levage et positionnement (1) est manoeuvré vers une position où le cadre (5) du dispositif de levage (1) peut être séparé et libéré de la tour et de la turbine éolienne, permettant ainsi le transport du dispositif de levage et positionnement (1) vers une autre turbine éolienne.

14. Méthode d'utilisation du dispositif de levage et positionnement (1) selon une ou plusieurs des revendications précédentes **caractérisée en ce que** le second contrepoids (46) est fixé/retiré du cadre (5) et son poids ajusté par l'ajout/le retrait de masses telles que, par exemple, de l'eau, du sable, du métal ou autre par rapport au poids de l'objet (3) qui doit être levé.
